(19) Europäisches Patentamt
European Patent Office
Office européen des brevets

(11) Veröffentlichungsnummer: **0 417 485 A2**

## (12) EUROPÄISCHE PATENTANMELDUNG

(21) Anmeldenummer: 90115413.8

(22) Anmeldetag: 10.08.90

(51) Int. Cl.5: **B30B 11/00, B30B 15/14**

(30) Priorität: 12.09.89 DE 3930475

(43) Veröffentlichungstag der Anmeldung:
**20.03.91 Patentblatt 91/12**

(84) Benannte Vertragsstaaten:
**AT CH DE IT LI SE**

(71) Anmelder: **Dorst Maschinen und Anlagenbau Otto Dorst und Dipl.-Ing Walter Schlegel GmbH & Co.**
**Mittenwalder Strasse 61 P.O. Box 109 + 129**
**W-8113 Kochel am See(DE)**

(72) Erfinder: **Fleissner, Roland**
**Elilandstrasse 9**
**W-8174 Benediktbeuern(DE)**
Erfinder: **Schröferle, Josef**
**Urthal 2**
**W-8121 Sindelsdorf(DE)**

(74) Vertreter: **Herrmann-Trentepohl, Werner, Dipl.-Ing. et al**
**Kirschner, Grosse, Bockhorni Forstenrieder Allee 59**
**W-8000 München 71(DE)**

(54) **Presse zur Herstellung masshaltiger Presslinge aus pulverförmigem Material.**

(57) Bei einer Presse zur Herstellung maßhaltiger Preßlinge aus pulverförmigem, insbesondere keramischem Material, mit einem Pressenständer, einem darin aufgenommenen Werkzeug, mindestens einem auf das Werkzeug einwirkenden Pressenstempel und mit einer Einrichtung zur Korrektur des Pressenhubs in Abhängigkeit der Dehnung des Pressenständers weist die Korrektureinrichtung eine Meßeinrichtung zur Aufnahme der Dehnung des Pressenständers sowie einen Multiplikator auf, der die von der Meßeinrichtung ermittelte Dehnung des Pressenständers zur Erzeugung eines Korrektursignals mit einem Korrekturfaktor multipliziert, der gleich dem Verhältnis von Ständerdehnung zur Gesamtverformung der Presse ist. Die Korrektureinrichtung ändert dann den Pressenhub selbsttätig um das Korrektursignal.

Fig. 4

## PRESSE ZUR HERSTELLUNG MASSHALTIGER PRESSLINGE AUS PULVERFÖRMIGEM MATERIAL

Die Erfindung betrifft eine Presse gemäß dem Oberbegriff des Patentanspruches 1.

Bei der Herstellung von Preßlingen aus pulverförmigem Material, insbesondere keramischem Material auf Pulver- bzw. Kalibrierpressen stellt die Höhe der Preßlinge eine kritische Größe dar. Abweichungen von der Sollstärke können sich aufgrund einer Vielfalt von Faktoren ergeben, wie Füllmenge, Schüttdichte des Pulvers, Dehnungsverhalten von Werkzeug und Presse und dgl. mehr. Selbstverständlich ist man bestrebt, das Toleranzfeld sehr eng zu halten, was jedoch mit einem entsprechenden Aufwand, insbesondere Steuerungsaufwand an der Presse verbunden ist. Nach dem Sintervorgang sind die Teile bereits relativ fest und nurmehr bedingt elastisch, so daß im nachfolgenden Kalibriervorgang in der Presse eine Veränderung der Höhe bzw. der Stärke des Teiles nur in einem begrenzten Umfang möglich ist. Bei zu großen Abweichungen von der Sollhöhe muß die Bearbeitung der Teile auf Sollhöhe mechanisch erfolgen, insbesondere durch Schleifen. Bei der Festigkeit der Preßteile erfordert dies den Einsatz von Diamantschleifscheiben, was jedoch mit einem zusätzlichen Abeitsvorgang verbunden ist und wodurch zum anderen auch die Werkzeugkosten entsprechend stark in die Kalkulation eingehen.

Es ist zwar bereits bekannt, bei der Herstellung von maßhaltigen Preßlingen die Dehnung des Ständers der Presse zu berücksichtigen (DE-OS 29 24 704), wobei bei dieser bekannten Presse von der Matrize eine Meßlatte angebracht ist, die an den Enden mit Maßstäben versehen ist, denen gegenüber Meßköpfe verschiebbar sind- die jeweils mit dem Oberstempel bzw. dem Unterstempel fest verbunden sind. Dadurch ist sichergestellt, daß die relative Beziehung zwischen den beiden Meßelementen durch eine beim Preßvorgang auftretende Längung des Pressenständers nicht verändert wird und damit die Höhe der Preßteile exakt feststellbar ist.

Aufgabe der Erfindung ist es, eine Presse zur Herstellung maßhaltiger Preßlinge derart weiterzuentwickeln, daß die Presse praktisch ein starres Verhalten zeigt, und damit eine einwandfreie Herstellung maßhaltiger Teile gewährleistet ist. Dies soll gleichzeitig durch einen einfachen Aufbau der Presse realisiert werden.

Diese Aufgabe wird erfindungsgemäß durch die im kennzeichnenden Teil des Anspruches 1 enthaltenen Merkmale gelöst. Zweckmäßige Weiterbildungen der Erfindung sind durch die in den Unteransprüchen enthaltenen Merkmale gekennzeichnet.

Bei der Konzeption der Erfindung ist davon ausgegangen worden, daß eine maßgebliche Komponente bei der Abweichung der Isthöhe der Preßlinge von der Sollhöhe in der elastischen Verformung der Presse während des Preßvorganges besteht. Gelingt es, diese elastische Verformung auszuschalten bzw. zu kompensieren, dann ist es mit einfachen Maßnahmen möglich, bei gleichen Füllmengen maßhaltige Preßlinge herzustellen. Hierbei ist erkannt worden, daß es ausreicht, die Ständerdehnung je Preßvorgang auf zunehmen und diese Ständerdehnung über einen Korrekturwert, der die Verformung der übrigen Bauteile der Presse berücksichtigt, in die Gesamtverformung der Presse umzurechnen. Entsprechend dieser Gesamtverformung wird dann die Hublänge der Presse korrigiert, was insbesondere durch ein Nachfahren des Lesekopfes des Längenmeßsystems bestehend aus Lesekopf und Meßlineal erfolgt. Über das Meßlineal kann die exakte Hublänge gelesen werden, so daß die Preßlinge auf Sollhöhe verdichtet werden. Der Korrekturwert für die Gesamtverformung der Presse, der die positiven Dehnungen und die negativen Dehnungen (Stauchungen) des Werkzeuges, des Adapters, der Zylinder und auch des Preßlings selbst berücksichtigt, wird empirisch im voraus ermittelt und dann als Konstante im Preßverfahren selbst verwendet. Dies ist deswegen möglich, da die Deformationen zur Preßkraft proportional sind, so daß die Gesamtdehnung gleich der Ständerdehnung multipliziert um den Korrekturfaktor ist. Für den Korrekturfaktor reicht es aus, einen Näherungswert zu verwenden, der den zu erwartenden Gesamtverformungen der Presse entspricht. Nach der Erfindung wird bei einer Wegmessung vorzugsweise die Ständerdehnung aufgenommen. Im Falle eines Druckaufnehmers wird die Dehnmeßstreifenanordnung vorzugsweise am Kolben des Preßzylinders angeordnet. Dann erfolgt eine Korrektur um den Korrekturfaktor, um über den hierbei ermittelten Wert auf die Gesamtverformung zu kommen. Entsprechend der Gesamtverformung erfolgt dann eine Korrektur des Lesekopfes, so daß beim Pressenhub die Gesamtverformung der Presse kompensiert ist.

Hierbei ist es zweckmäßig, das Längenmeßsystem, also Meßstab und Lesekopf in der Achse des Preßstempels selbst unterzubringen und damit zentral anzuordnen, so daß Verfälschungen aufgrund von Verbiegungen und einem Kippen der Traverse ausgeschaltet sind.

Die Korrektureinrichtung nach der Erfindung kann mechanisch, hydraulisch oder elektronisch realisiert werden. Im Falle einer hydraulischen Korrektur wird dem Korrekturfaktor durch ein entsprechendes Verhältnis der wirksamen Kolbenflächen Rechnung getragen, im Falle einer mechanischen Einrichtung durch entsprechende Auswahl der Hebelarme eines Lenkhebels. Besonders bevorzugt ist eine elektronische Korrektur, wobei die Preßkraft durch Druckaufnehmer aufgenommen oder die Ständerdehnung durch einen Wegaufnehmer gemessen werden kann. Im Falle des Druckaufnehmers erfolgt die Umwandlung der Daten in eine Weggröße mit einer Korrektur um einen Faktor, der die Gesamtverformung der Presse berücksichtigt. Der hierbei ermittelte Wert wird dann dem durch den Lesekopf gemessenen Wert aufaddiert. Die Elektronik hat den Vorteil, daß eine Veränderung des Korrekturwerts k ohne weiteres möglich ist.

Nachfolgend werden Ausführungsbeispiele anhand der Zeichnung beschrieben. Darin zeigen:

Fig. 1 eine Schemaansicht eines Rohlings nach dem Sintern bzw. nach dem Fressen oder Kalibrieren,

Fig. 2 ein Diagramm des Hubs über der Preßkraft,

Fig. 3 eine schematische Darstellung einer Presse im unbelasteten und im belasteten Zustand,

Fig. 4 eine schematische Darstellung einer Presse mit einer hydraulischen Korrekturvorrichtung sowie

Fig. 5 eine schematische Darstellung eines Teils der Presse mit einer mechanischen Korrekturvorrichtung.

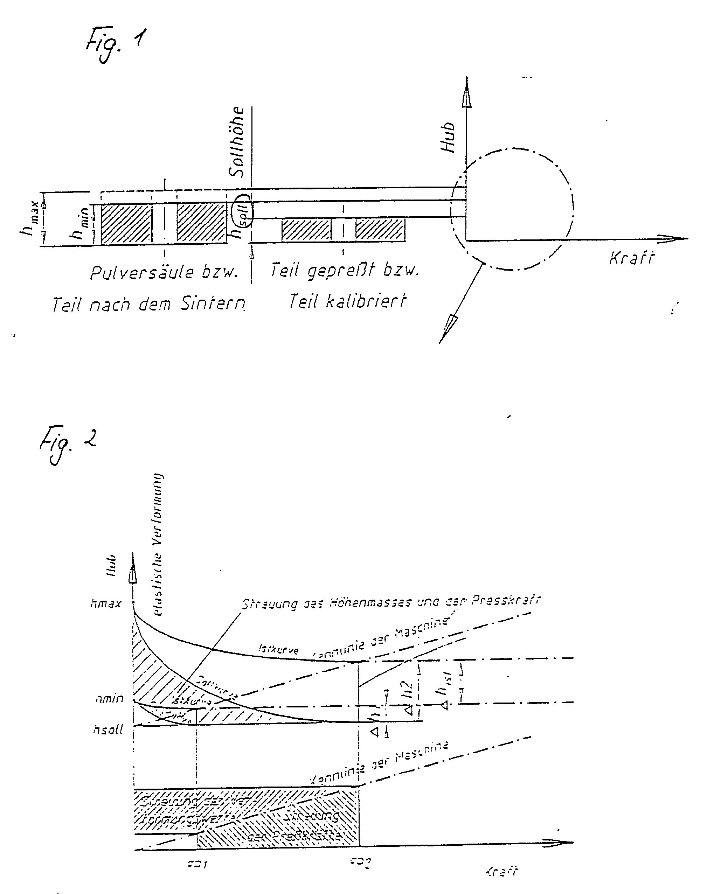

Fig. 1 zeigt links eine Pulversäule bzw. einen unkalibrierten, gesinterten Rohling, wobei $h_{max}$ und $h_{min}$ die maximale oder minimale Pulversäulenhöhe oder Teilhöhe nach dem Sintern darstellen. Die rechte Darstellung zeigt das Teil nach dem Pressen bzw. Kalibrieren, und zwar in der Sollhöhe $h_{soll}$.

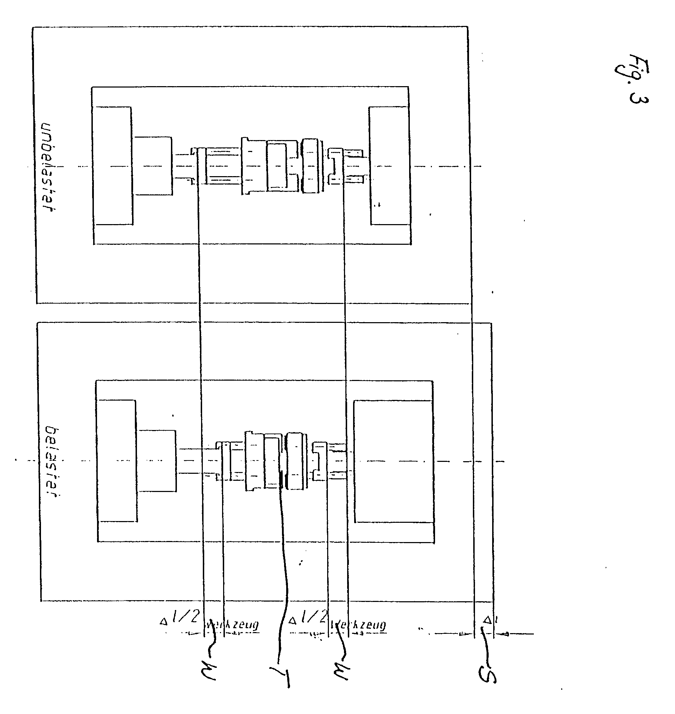

Aus dem Preßkraftverlauf nach Fig. 2 ergibt sich, daß beim Pressen bzw. Kalibrieren ausgehend von einer Höhe $h_{max}$ nach dem Pressen bzw. Kalibrieren des Teils eine Abweichung $h_2$ des Fertigmaßes von der Höhe $h_{soll}$ feststellbar ist, die sich aus $h_{ist}$ und $h_1$ zusammensetzt, wobei $h_{ist}$ den durch die elastische Verformung der Maschine bedingten Fehler und $h_1$ die Abweichung des Fertigmaßes bei der Ausgangshöhe $h_{min}$ darstellt. Die Differenzhöhe $h_1$ kann durch Verringerung der programmierten Teilhöhe kompensiert werden, jedoch ist eine Korrektur der Höhendifferenz $h_{ist}$ nicht möglich, vielmehr ist eine mechanische Bearbeitung erforderlich, die im Falle des Schleifens der Preßlinge durch Diamantscheiben nicht nur aufwendig, sondern auch teuer ist.

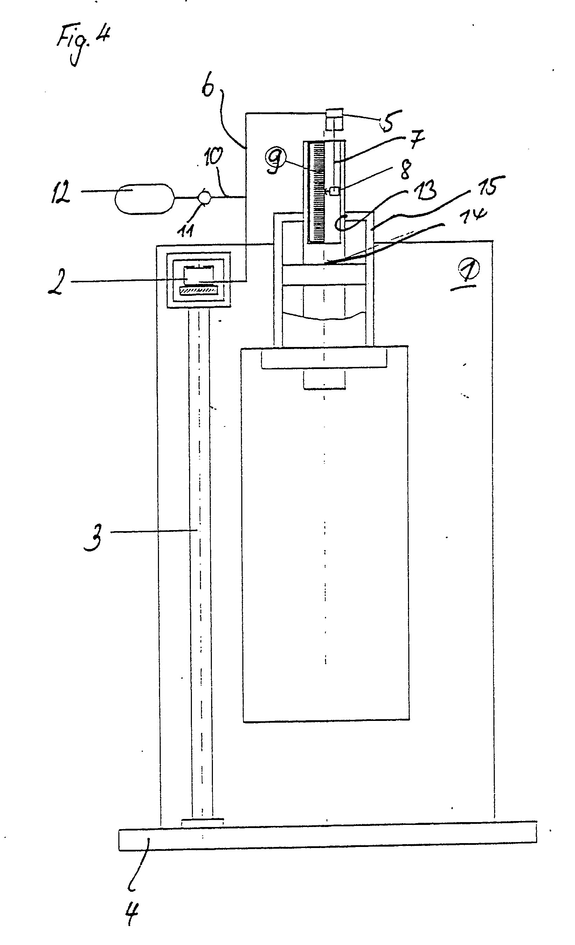

Wie ein Vergleich der Presse im unbelasteten und belasteten Zustand aus Fig. 3 ergibt, setzt sich die elastische Verformung der Presse im wesentlichen aus drei Komponenten zusammen, nämlich der mit S in Fig. 3 bezeichneten Ständerdehnung, der mit W bezeichneten Dehnung des Werkzeuges und der mit T bezeichneten Dehnung des Preßlings selbst. Im Falle des Werkzeugs treten Dehnungen und Stauchungen auf, im Verhältnis zwischen dem oberen und dem unteren Teil des Werkzeugs. Werkzeug ist hierbei im weiteren Sinne zu verstehen, wobei hierunter auch Adapter, Zylinder, Adapterplatten und dergleichen fallen. Die Ständerdehnung läßt sich hierbei vergleichsweise einfach ermitteln, und zwar von Preßvorgang zu Preßvorgang, was jedoch beim Werkzeug, dem Adapter und dem Teil nicht ohne weiteres möglich ist. Unter der Berücksichtigung, daß alle Verformungen der Presse zur Preßkraft proportional sind und damit auch zueinander, läßt sich allerdings die Gesamtverformung der Presse mit der ohne weiteres meßbaren Ständerdehnung in Beziehung setzen, wobei

$$l_{ges} = k \times lS$$

wobei $l_{ges}$ die gesamte Dehnung der Presse, lS die Ständerdehnung und k den Korrekturwert darstellt, der sich aus dem Verhältnis zwischen der Gesamtverformung und der Ständerdehnung ergibt, also $l_{ges}/lS$.

Der Korrekturfaktor läßt sich somit für eine Presse ohne weiteres ermitteln und kann dann für die während des Pressens vorzunehmenden Korrekturen als konstanter Wert verwendet werden, um den die während jedes Preßvorgangs ermittelte Ständerdehnung korrigiert wird, um das Maß der Gesamtdehnung zu erhalten, um welche der Lesekopf für das Ablesen der Hublänge verstellt und dadurch die gesamte Verformung wieder ausgeglichen wird.

Die Ausführungsform nach Fig. 4 zeigt eine mechanisch-hydraulische Korrektureinrichtung. Mit 1 ist der Pressenständer bezeichnet, dessen Dehnung durch einen hydraulischen Zylinder 2 aufgenommen wird. Hierzu ist der hydraulische Zylinder 2 auf einer Stange 3 gelagert, die mit der Fußplatte 4 der Presse verbunden ist und an der Ständerdehnung während des Preßvorgangs nicht teilnimmt. Hierbei kann wahlweise der Zylinder mit der Stange 2 befestigt und der Kolben am Pressenständer 1 befestigt sein oder umgekehrt, so daß über die Relativbewegung zwischen Kolben und Zylinder des hydraulischen Zylinders 2 die Ständerdehnung ermittelt werden kann. Die Druckkammer des hydraulischen Zylinders 2 ist mit einem weiteren hydraulischen Zylinder 5 über eine Leitung 6 verbunden. Das Verhältnis der wirksamen Kolbenfläche des hydraulischen Zylinders 2 zur wirksamen Kolbenfläche des hydraulischen Zylinders 5 entspricht dem zuvor ermittelten Korrekturfaktor k der Presse, so daß die über die Druckleitung 6 miteinander gekoppelten hydraulischen Zylinder 2 und 5 einen Multiplikator darstellen. Das heißt, die über den hydraulischen Zylinder 2 aufgenommene Ständerdehnung wird in Folge der oben beschrie benen Abstimmung der beiden wirksamen Kolbenflächen in einen korrigierten Wert automatisch umgesetzt, der die Gesamtverformung der Presse darstellt. Da der Kolben oder der Zylinder der hydraulischen Kolben/Zylindereinheit 5 über eine Stange 7 mit dem Lesekopf 8 verbunden ist, erfolgt bei jedem Preßvorgang eine automatische Nachführung des Lesekopfes zum Ausgleich der Gesamtverformung der Presse. Insoweit wird der Lesekopf 8 gegenüber dem Meßlineal 9 verschoben, so daß praktisch eine starre Presse realisiert ist.

Wie aus Fig. 4 ersichtlich ist, zweigt von der Druckleitung 6 eine Zweigleitung 10 mit einem Rückschlagventil 11 und einem Membranspeicher 12 ab, wobei der Membranspeicher zum Ausgleich von Lecköverlusten vorgesehen ist.

Das Meßsystem aus Meßlineal 9 und Lesekopf 8 ist in einer Bohrung 13 des Kolbens 14 des Preßzylinders 15 eingesetzt und befindet sich damit zentral in der Mittelachse der Presse. Dadurch werden Ungenauigkeiten bei einer Kippung der Traverse und dergleichen völlig ausgeschaltet. Zugleich ergibt sich eine baulich günstige Unterbringung der Meßsystemeinheit.

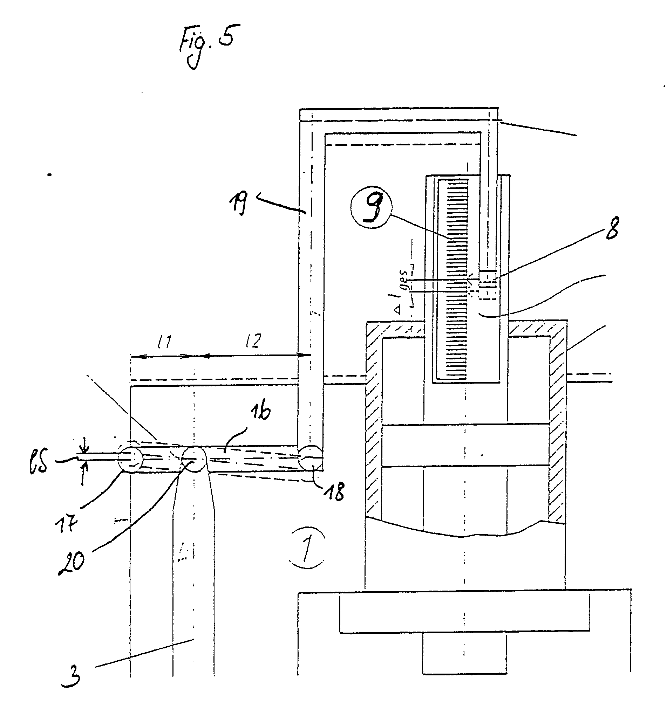

Die Ausführungsform nach Fig. 5 zeigt eine mechanische Korrektureinrichtung, wobei die ständerdehnung IS durch einen Lenkhebel 16 aufgenommen wird, der mit seinem Ende bei 17 am Pressenständer 1 angelenkt ist. Das andere Ende des Hebels 16 ist bei 18 mit einem Stellgestänge 19 verbunden, welches mit seinem Ende auf den Lesekopf 8 einwirkt, der ebenso wie im Ausführungsbeispiel nach Fig. 4 in einer Bohrung der Kolbenstange des Preßstempels zusammen mit dem Meßlineal 9 aufgenommen ist. Im übrigen ist der Lenkhebel 16 bei 20 auf einem Ständer 3 verlagert, der dem Ständer 3 in der Ausführungsform nach Fig. 4 entspricht. Das Schwenklager 20 ist hierbei so angeordnet, daß sich über diese Lagerung die gewünschte Korrektur um den Korrekturfaktor k ergibt. Dies wird dadurch erreicht, daß die beiden Hebelarme des Lenkhebels 16 so abgestimmt werden, daß das Verhältnis des Abstandes zwischen dem Schwenklager und dem Gelenkpunkt 18 zum Abstand zwischen dem Schwenklager 20 und dem Gelenkpunkt 17 dem zuvor ermittelten Korrekturfaktor k der Presse entspricht. Falls der Korrekturfaktor k geändert werden soll, so konnte dem durch entsprechende Verschiebung des Schwenklagers 20 und einer damit einhergehenden Veränderung der wirksamen Länge der Hebel arme Rechnung getragen werden.

Nach einer weiteren nicht dargestellten Ausführungsform erfolgt die Korrektur über eine elektronische Korrektureinrichtung, wobei die Preßkraft durch einen Druckaufnehmer ermittelt wird, wozu vorzugsweise eine Dehnungsmeßstreifenanordnung am Pressenständer verwendet wird. Die Daten werden in Meßschritte entsprechend der Kennlinie der Maschine umgewandelt. Es erfolgt dann eine Multiplikation der Meßschritte mit dem Faktor k, eine Addition der errechneten Meßschritte mit den Istwerten vom Positionsmeßsystem, so daß der ermittelte Wert auf den durch den Lesekopf gemessenen Wert aufaddiert wird.

## Ansprüche

1. Presse zur Herstellung maßhaltiger Preßlinge aus pulverförmigem, insbesondere keramischem Material, mit einem Pressenständer, einem darin aufgenommenen Werkzeug, mindestens einem auf das Werkzeug einwirkenden Pressenstempel und mit einer Einrichtung zur Korrektur des Pressenbugs in Abhängigkeit von der Dehnung des Pressenständers, **dadurch gekennzeichnet,** daß die Korrektureinrichtung eine Meßeinrichtung (2; 17, 20) zur Aufnahme der Dehnung eines Teils der Presse, vorzugsweise des Pressenständers sowie einen Multiplikator (2, 5; 16, 20, 19) aufweist, der die von der Meßeinrichtung ermittelte Dehnung des Teils der Presse bzw. des Pressenständers zur Erzeugung eines Korrektursignals mit einem Korrekturfaktor (k) multipliziert, der gleich dem Verhältnis der ermittelten Dehnung zur Gesamtverformung der Presse ist, und daß die Korrektureinrichtung den Pressenhub um das Korrektursignal ändert.

2. Presse nach Anspruch 1, **dadurch gekennzeichnet,** daß die Korrektureinrichtung einen Wandler aufweist, der das Korrektursignal in eine Weggröße wandelt.

3. Presse nach Anspruch 1 oder 2, **dadurch gekennzeichnet,** daß die Korrektureinrichtung einen Lesekopf (8) für ein Längenmeßlineal (9) aufweist, der um die Weggröße des Korrektursignals verschiebbar ist.

4. Presse nach Anspruch 3, **dadurch gekennzeichnet,** daß das Längenmeßlineal (9) und der verschiebliche Lesekopf (8) in der Achse des Pressenstempels, vorzugsweise innerhalb des den Pressenstempel betätigenden Kolbens (14) des Preßzylinders (15) angeordnet sind.

5. Presse nach einem der vorhergehenden Ansprüche, **dadurch gekennzeichnet,** daß die Ständerdehnung hydraulisch über mindestens einen Hydraulikzylinder (2) aufgenommen ist, von dem einer der beiden Teile (Kolben oder Zylinder) mit dem Pressenständer (1) gekoppelt und der andere ortsfest verlagert ist.

6. Presse nach Anspruch 5, **dadurch gekennzeichnet,** daß der Multiplikator durch einen weiteren Hydraulikzylinder (5) gebildet ist, wobei das Verhältnis der wirksamen Kolbenfläche des die Dehnung aufnehmenden Hydraulikzylinders (2) zur wirksamen druckbeaufschlagten Kolbenfläche des Multiplikators den Korrekturfaktor (k) beträgt.

7. Presse nach Anspruch 5 oder 6, **dadurch gekennzeichnet,** daß der Multiplikator in Reihe hinter dem mit dem Pressenständer (1) gekoppelten Hydraulikzylinder (2) angeordnet ist, wobei in der die Druckmittelkammer beider Hydraulikzylinder verbindenden Leitung (6) ein Druckmittelspeicher, vorzugsweise ein Membranspeicher (12) zum Ausgleich von Lecköverlusten angeordnet ist.

8. Presse nach einem der Ansprüche 5 bis 7, **dadurch gekennzeichnet,** daß der verfahrbare Teil des weiteren Hydraulikzylinders (5) den Lesekopf (8) verschiebt.

9. Presse nach einem der Ansprüche 5 bis 8, **dadurch gekennzeichnet,** daß der die Ständerdehnung aufnehmende Hydraulikzylinder (2) auf einer an der Fußplatte der Presse oder im Fundament verlagerten Stange (3) angeordnet und der Kolben mit dem Pressenständer (1) gekoppelt ist oder umgekehrt.

10. Presse nach einem der Ansprüche 5 bis 9, **dadurch gekennzeichnet,** daß der als Multiplikator dienende wei tere Hydraulikzylinder (5) eine Rückstellfeder für die Rückstellung des beweglichen Teils aufweist.

11. Presse nach einem der Ansprüche 1 bis 4, **dadurch gekennzeichnet,** daß die Ständerdehnung mechanisch über einen Lenkhebel (16) aufgenommen ist, welcher auf eine Stellstange (19) zur Verschiebung des Lesekopfes (8) relativ zum Maßstab (9) einwirkt.

12. Presse nach Anspruch 11, **dadurch gekennzeichnet,** daß der Lenkhebel (16) mit einem Ende (bei 17) am Pressenständer (1) und mit seinem anderen Ende (bei 18) an der Stellstange (19) angelenkt ist und daß der Hebel (16) zwischen seinen Enden an einer an der Fußplatte oder dem Fundament der Presse verlagerten Stange (3) schwenkbar gelagert ist.

13. Presse nach Anspruch 11 oder 12, **dadurch gekennzeichnet,** daß der Multiplikator durch die Lenkhebellagerung (bei 20) gebildet ist, wobei das Verhältnis des Abstandes zwischen Anlenkpunkt der Stell stange (18) und dem Schwenklager (20) zum Abstand zwischen dem Anlenkpunkt (17) des Hebels am Pressenständer (1) und dem Schwenklager (20) dem Korrekturfaktor (k) entspricht.

14. Presse nach einem der Ansprüche 1 bis 4, **dadurch gekennzeichnet,** daß die Aufnahme der Dehnung durch einen Druckaufnehmer, vorzugsweise eine Dehnmeßstreifenanordnung, oder durch einen Wegaufnehmer erfolgt, dem ein Multiplikator nachgeschaltet ist, um das ggf. in eine Weggröße gewandelte Signal mit dem Korrekturfaktor (k) zu multiplizieren und den hierdurch ermittelten Wert auf den durch den Lesekopf gemessenen Wert aufzuaddieren.

15. Presse nach Anspruch 14, **dadurch gekennzeichnet,** daß der Druckaufnehmer am Kolben (14) des Preßzylinders (15) angeordnet ist.

## Fig. 1

Pulversäule bzw. Teil nach dem Sintern

Teil gepreßt bzw. Teil kalibriert

## Fig. 2

Fig. 3

unbelastet          belastet

S

Werkzeug Δ1/2

T

Werkzeug Δ1/2

W

W

Fig. 4

Fig. 5